# EUROPEAN PATENT APPLICATION

(11) **EP 3 165 504 A1**
(43) Date of publication of application: **10.05.2017**
(21) Application number: 15193674.7
(22) Date of filing: 09.11.2015
(51) Int. Cl.: C01B 3/50, C01B 3/58, C01B 3/52

(54) **PROCESS FOR METAL CARBONYL REMOVAL FROM SYNGAS**

(71) Applicant: Shell Internationale Research Maatschappij B.V., 2596 HR Den Haag (NL)
(72) Inventor: MITKIDIS, Georgios, 1031 HW Amsterdam (NL); HEROLD, Rudolf Henri, 1031 HW Amsterdam (NL)
(74) Representative: Matthezing, Robert Maarten

(57) **Abstract**

The invention relates to a process for removing metal carbonyls from syngas. Syngas is contacted with a catalyst comprising silica, silica-alumina, zeolite and/or a molecular sieve at a temperature of 200 - 300 °C to remove metal carbonyls. The obtained syngas is contacted with an hydrolysis catalyst at a temperature in the range of from 170 to 250 °C to hydrolyze HCN and/or COS. The obtained syngas is cooled to 10 - 80 °C, and passed through an acid gas removal unit to remove H2S and/or CO2.

## Description

### Field of the invention

The invention relates to a process for metal carbonyl removal from synthesis gas, also referred to as syngas. The invention especially relates to the removal of metal carbonyls from syngas at an elevated temperature.

### Background to the invention

Synthesis gas mainly comprises carbon monoxide and hydrogen. Syngas generally further comprises carbon dioxide, nitrogen, nitrogen-containing components (such as HCN and NH3), metal carbonyls and/or steam or water. Syngas may comprise hydrogen sulphide, carbonyl sulphide and/or carbonyl disulphide.

Synthesis gas may, for example, be produced by means of partial oxidation or steam reforming of hydrocarbons including natural gas, distillate oils and residual oil, and by gasification of coal or coke.

During the production of synthesis gas, carbon monoxide and hydrogen are formed. Additionally hydrogen sulphide and/or carbonyl compounds of nickel and/or iron may be formed during the production of syngas. Under conditions prevailing in gasification plants further metal carbonyls may be formed as a result of reaction of carbon monoxide with iron and nickel surfaces and/or with iron and nickel present in the hydrocarbonaceous feedstock to give the corresponding metal carbonyls. Iron pentacarbonyl is often formed by the reaction of carbon monoxide with steel materials in the process equipment. Metal carbonyls can also be formed when gases are transported or stored in metal containers. Nickel tetracarbonyl and iron pentacarbonyl, especially in combination with hydrogen sulphide, can cause serious problems during treatment or use of synthesis gas, mainly due to thermal and/or chemical decomposition.

Synthesis gas streams are used in many ways in industrial processes. For example, synthesis gas streams can be used for the generation of electricity via a gas turbine fired on synthesis gas. Removal of sulphur compounds is required to prevent or reduce emission of SOx and meet environmental specifications. Another use of synthesis gas streams is for the production of hydrogen via the so-called water gas shift reaction.

Metal carbonyls, in particular nickel tetracarbonyl and iron pentacarbonyl, in combination with hydrogen sulphide, are prone to thermal and/or chemical decomposition to metal sulphides. These metal sulphides can deposit on process equipment, leading to fouling and/or plugging in the process where the synthesis gas stream is used.

Therefore, it is important to remove metal carbonyls effectively from gaseous streams, preferably to levels below 1 ppmv or even below 0.1 ppmv. Given the fact that during normal operation of a gasification plant several tons of iron pentacarbonyl and nickel tetracarbonyl per year are produced, the metal carbonyl problem is a sizeable one.

Processes for removal of metal carbonyls from synthesis gas have been described, for example, in WO0002644, WO2008037726, and WO2008037728.

In addition to the metal carbonyls that may be present in syngas, syngas may comprise acidic compounds such as carbon dioxide and/or sulphur compounds such as H₂S, sulphides, disulphides and thiophenes.

Numerous natural gas wells produce what is called "sour gas", i.e. natural gas comprising acidic compounds such as carbon dioxide and/or sulphur compounds such as H2S, sulphides, disulphides and thiophenes. The total amount of acidic compounds is generally too high, making the natural gas unsuitable for direct use. Depending on the intended use of the natural gas, acidic compounds often have to be removed. Because gas is generally further processed, for example to generate power in gas turbines, or in the case of synthesis gas used in catalytic conversion reactions, or in the case of natural gas transported via pipelines or cooled and liquefied to form liquefied natural gas, removal of contaminants to a certain levels is often desired.

Removal of HCN from gas streams is important not only because of its own toxic properties, but also in view of corrosive NOx compounds which can evolve when both HCN and oxygen are present in a gas stream. In addition, HCN itself is corrosive to equipment.

Processes to produce purified gas from gas comprising H₂S, CO₂ and HCN and/or COS have been described in, for example, WO2009016139.

It is thus regularly required to remove metal carbonyls as well as acidic compounds from syngas. There is a need for a process in which both metal carbonyls and acidic compounds are removed to the required levels, while at the same time the catalysts used have a long life-time.

### Summary of the invention

The present invention relates to a process for removing metal carbonyls from synthesis gas, the process comprising the steps of:
(a) contacting the synthesis gas with a catalyst comprising silica, silica-alumina, zeolite and/or a molecular sieve at a temperature in the range of from 200 to 300 °C to remove metal carbonyls, and
(b) contacting at least a part of the synthesis gas obtained in step (a) with an hydrolysis catalyst at a temperature in the range of from 170 to 250 °C to hydrolyze HCN and/or COS, and
(c) cooling at least a part of the synthesis gas obtained in step (b) to a temperature in the range of from 10 to 80 °C, and
(d) passing at least a part of the synthesis gas obtained in step (c) through an acid gas removal unit to remove H₂S and/or CO₂, and
(e) optionally contacting at least a part of the synthesis gas obtained in step (d) with an adsorbent comprising activated carbon, silica, silica-alumina, zeolite and/or a molecular sieve at a temperature in the range of from 10 to 80 °C.

One advantage of a process according to the present invention is that it is possible to achieve a very effective removal of metal carbonyls as well as a very effective removal of HCN and/or COS.

Another advantage is that metal carbonyls are decomposed in step (a). This thus reduces or eliminates the collection of toxic metal carbonyls in adsorbent material.

A further advantage is that metal carbonyls are removed at a similar temperature before the removal of HCN and/or COS. Severe chilling and/or heating of the gas is not required in between these steps.

A further advantage of the present invention is that the hydrolysis catalyst for hydrolyzing HCN and/or COS proved to have a very long life-time.

### Detailed description of the invention

The present invention relates to a process for removing metal carbonyls from synthesis gas, the process comprising the steps of:
(a) contacting the synthesis gas with a catalyst comprising silica, silica-alumina, zeolite and/or a molecular sieve at a temperature in the range of from 200 to 300 °C to remove metal carbonyls, and
(b) contacting at least a part of the synthesis gas obtained in step (a) with an hydrolysis catalyst at a temperature in the range of from 170 to 250 °C to hydrolyze HCN and/or COS, and
(c) cooling at least a part of the synthesis gas obtained in step (b) to a temperature in the range of from 10 to 80 °C, and
(d) passing at least a part of the synthesis gas obtained in step (c) through an acid gas removal unit to remove H2S and/or CO₂, and
(e) optionally contacting at least a part of the synthesis gas obtained in step (d) with an adsorbent comprising activated carbon, silica, silica-alumina, zeolite and/or a molecular sieve at a temperature in the range of from 10 to 80 °C.

The process steps are preferably performed in the same order as listed above.

In step (a) synthesis gas, also referred to as syngas, is contacted with a catalyst comprising silica, silica-alumina, zeolite and/or a molecular sieve at a temperature in the range of from 200 to 300 °C, preferably 220 to 270 °C. In step (a) metal carbonyls are removed from the synthesis gas.

Preferably the catalyst used in step (a) comprises alumina and silica. More preferably the catalyst comprises 10 to 20 wt% alumina and 90 to 80 wt% silica. The catalyst may be a particulate catalyst. The particles may have any suitable size, for example in the range of between 1 to 50 mm.

Preferably the metal carbonyls include Fe(CO)₅ and/or Ni(CO)₄.

In step (b) at least a part of the synthesis gas obtained in step (a) is contacted with an hydrolysis catalyst at a temperature in the range of from 170 to 250 °C. In step (b) HCN and/or COS is hydrolyzed.

The hydrolysis may be accomplished by conventional processes. A conventional hydrolysis catalyst may be used. Catalysts for the hydrolysis of HCN and/or COS are known to those skilled in the art and include, for example, titania based catalysts, and catalysts based on alumina and/or chromium-oxide. The catalyst may be a particulate catalyst. The particles may have any suitable size, for example in the range of between 1 to 50 mm.

Preferably soot particles are removed. Soot particles preferably are removed by passing synthesis gas through a filter. Soot removal may be performed before, during or after step (a) and before step (b). Preferably soot is removed during or after step (a) and before step (b). More preferably soot removal is performed after step (a) and before step (b).

Preferably soot removal is performed by passing synthesis gas through a filter at a temperature in the range of from 200 to 300 °C. Any suitable filter may be used. A suitable filter, for example, is a guard bed comprising titania.

In step (c) at least a part of the synthesis gas obtained in step (b) is cooled to a temperature in the range of from 10 to 80 °C. Any suitable cooling method may be used, for example using an air cooler and/or a trim cooler and/or using heat exchange.

In step (d) at least a part of the synthesis gas obtained in step (c) is passed through an acid gas removal unit. In the acid removal unit H2S and/or CO2 are removed from the synthesis gas.

Preferably the acid gas removal unit of step (d) comprises a physical solvent and/or a chemical solvent. More preferably the acid gas removal unit of step (d) comprises one or more physical solvents selected from: sulfolane (cyclo-tetramethylenesulfone and its derivatives), aliphatic acid amides, N-methyl- pyrrolidone, N-alkylated pyrrolidones and the corresponding piperidones, methanol, ethanol and mixtures of dialkylethers of polyethylene glycols.

Even more preferably the acid gas removal unit of step (d) comprises one or more chemical solvents selected from: primary amine, secondary amine, and tertiary amine; preferably selected from amines derived of ethanolamine; more preferably selected from: monoethanol amine (MEA), diethanolamine (DEA), triethanolamine (TEA), diisopropanolamine (DIPA) and methyldiethanolamine (MDEA) or mixtures thereof.

Step (e) is optional. In optional step (e) at least a part of the synthesis gas obtained in step (d) is contacted with an adsorbent. The absorbent is used to remove any metal carbonyls which remained in the synthesis gas and/or further metal carbonyls formed as a result of reaction of carbon monoxide with iron and nickel surfaces in the equipment used and/or with iron and nickel present in the hydrocarbonaceous feedstock. The absorbent used in step (e) comprises activated carbon, silica, silica-alumina, zeolite and/or a molecular sieve. Step (e) is performed at a temperature in the range of from 10 to 80 °C.

Preferably the adsorbent used in step (e) comprises a layer of hydrophobic solid adsorbent and a layer of activated carbon. More preferably the adsorbent comprises a layer of hydrophobic zeolite and a layer of activated carbon.

Even more preferably the first layer, meaning the layer with which the synthesis gas stream is first contacted, is a layer comprising hydrophobic zeolite and the second layer is a layer comprising activated carbon. It will be understood that the invention also includes the use of alternating layers of hydrophobic zeolite and activated carbon for removal of metal carbonyls. For the purpose of this invention, the term "hydrophobic zeolite" refers to a hydrophobic zeolite which only weakly adsorbs water. Suitable hydrophobic zeolites adsorb less than 25 kg H₂O/100 kg of dry adsorbent (25 °C, water vapour pressure 0.1 kPa), more suitably less than 10 kg H₂O/100 kg dry adsorbent.

Preferably the synthesis gas obtained in step (d) and/or step (e), is used as fuel, preferably as fuel for turbines, or as feedstock for a hydrogen plant.

## Claims

1. A process for removing metal carbonyls from synthesis gas, the process comprising the steps of:
(a) contacting the synthesis gas with a catalyst comprising silica, silica-alumina, zeolite and/or a molecular sieve at a temperature in the range of from 200 to 300 °C to remove metal carbonyls, and
(b) contacting at least a part of the synthesis gas obtained in step (a) with an hydrolysis catalyst at a temperature in the range of from 170 to 250 °C to hydrolyze HCN and/or COS, and
(c) cooling at least a part of the synthesis gas obtained in step (b) to a temperature in the range of from 10 to 80 °C, and
(d) passing at least a part of the synthesis gas obtained in step (c) through an acid gas removal unit to remove H2S and/or CO₂, and
(e) optionally contacting at least a part of the synthesis gas obtained in step (d) with an adsorbent comprising activated carbon, silica, silica-alumina, zeolite and/or a molecular sieve at a temperature in the range of from 10 to 80 °C.

2. A process according to claim 1, wherein soot particles are removed, preferably by passing synthesis gas through a filter, before, during or after step (a) and before step (b); preferably during or after step (a) and before step (b); more preferably after step (a) and before step (b).

3. A process according to claim 2, wherein synthesis gas is passed through a filter at a temperature in the range of from 200 to 300 °C.

4. A process according to any one of the above claims, wherein the metal carbonyls include Fe(CO)₅ and/or Ni(CO)₄.

5. A process according to any one of the above claims, wherein the catalyst used in step (a) comprises alumina and silica.

6. A process according to any one of the above claims, wherein the acid gas removal unit of step (d) comprises a physical solvent and/or a chemical solvent.

7. A process according to claim 6, wherein the acid gas removal unit of step (d) comprises one or more physical solvents selected from: sulfolane ( cyclo-tetramethylenesulfone and its derivatives), aliphatic acid amides, N-methyl- pyrrolidone, N-alkylated pyrrolidones and the corresponding piperidones, methanol, ethanol and mixtures of dialkylethers of polyethylene glycols.

8. A process according to claim 6 or 7, wherein the acid gas removal unit of step (d) comprises one or more chemical solvents selected from: primary amine, secondary amine, and tertiary amine; preferably selected from amines derived of ethanolamine; more preferably selected from: monoethanol amine (MEA), diethanolamine (DEA), triethanolamine (TEA), diisopropanolamine (DIPA) and methyldiethanolamine (MDEA) or mixtures thereof.

9. A process according to any one of the above claims, wherein step (e) is performed, and wherein the adsorbent used in step (e) comprises a layer of hydrophobic solid adsorbent and a layer of activated carbon.

10. A process according to any one of the above claims, wherein the synthesis gas obtained in step (d) and/or step (e), is used as fuel, preferably as fuel for turbines, or as feedstock for a hydrogen plant.
